# EUROPEAN PATENT APPLICATION

(11) **EP 2 977 103 A1**
(43) Date of publication of application: **27.01.2016**
(21) Application number: 14178004.9
(22) Date of filing: 22.07.2014
(51) Int. Cl.: B01J 23/755, C10K 3/04, C10L 3/08, B01J 21/04, B01J 21/02

(54) **Synthetic natural gas production using a carbon resistant, promoted supported catalyst**

(71) Applicant: Paul Scherrer Institut, 5232 Villigen (CH)
(72) Inventor: Schildhauer, Tilman J., 5200 Brugg (CH); Kampolis, Anastasios, 5300 Turgi (CH); Kröcher, Oliver, 5313 Klingnau (CH)
(74) Representative: Fischer, Michael

(57) **Abstract**

It is therefore the objective of the present invention to provide a method for the production of SNG taking advantage from a catalyst which has a high selectivity for the catalytic reactions and achieves long lifetime of the catalyst due to minor clogging and strong carbon resistance to prevent its deactivation.

These objectives are achieved according to the present invention by a method to convert a CO and/or CO₂ comprising a gas mixture stemming from an industrial processes, such as gasification of carbonaceous feedstocks (i.e. biomass), pyrolysis, ore conversion, combustion, calcination or fermentation, wherein the gas mixture further comprises saturated hydrocarbons in concentrations above 15% and/or unsaturated hydrocarbons, such as olefins, tars and/or aromatic compounds, into a methane rich gas by bringing the gas mixture into a contact with a supported metal catalyst comprising:
a) as an active phase nickel and optionally cobalt, ruthenium, iridium, molybdenum, iron or any possible combination thereof,
b) as a promoter boron and optionally sodium, potassium, calcium, magnesium, boron, rubidium, barium, gallium, phosphorus or any possible combinations thereof, and
c) as a support alumina and optionally silica, titania, lanthana, zirconia, ceria, magnesia or any possible combination thereof.

The presented invention improves the carbon resistance of nickel catalysts for low temperature (250-400°C) applications such as the methanation. Polymeric carbon is formed by reaction of carbon atoms on the catalyst surface under locally hydrogen-deficient situations. These carbon atoms stem from dissociation of carbon oxides and hydrocarbons whereby unsaturated hydrocarbons (ethylene, acetylene) and CO lead to higher carbon deposition rates. Using presently the promoter boron in the nickel catalyst avoids the formation of intermediates for polymeric carbon. As a second benefit, the formation of nickel carbides and carbon whiskers is decreased, too.

## Description

The present invention relates to a method for the production of synthetic natural gas.

The production of synthetic natural gas using wood biomass or coal as feedstock is promising route for alternative energy generation. Low temperature gasification producing significant amounts of methane has been proven to be energetically more efficient due to the decreased exothermicity of the subsequent methanation process. Nonetheless, the low temperature gasification results in the production of unsaturated hydrocarbons (olefins) and aromatic compounds. The presence of these hydrocarbons in the feed has been found to enhance the formation of carbon species at the surface, which lead either to encapsulation or detachment of metal particle from catalyst's surface and to its progressive deactivation. The carbon types referred to in the literature are carbidic, polymeric, graphitic, whisker/filamentous, etc. The Boudouard reaction (1), but also other reactions such as CH₄ decomposition or polymerization of hydrocarbons (2, 3) lead to the formation of various types of carbon deposits, such as carbidic, polymeric/amorphous, graphitic and whisker/fiber types of carbon.

2CO → C + CO₂, ΔH⁰ = -171 kJ/mol (1)

CₓH_{y} +...+ CₓH_{y} → high molecular weight hydrocarbons → C_{α}, C_{β}, C_{γ} + H₂ (2)

CₓH_{y} → C_{α} + H +CHₓ + C₂H_{y}+....+ CₙH_{z} (3)

The formation of certain metal carbide compounds after extended exposure time to the reaction feed is considered of great importance, because it is related with the detachment mechanism of catalyst's nickel particles from the support.

To date, there is not any state-of-the-art process for suppressing carbon deposition, and specifically carbidic type, on metal catalysts for CO/CO₂ methanation, hydrogenation or hydrogenolysis reactions. Several approaches have been proposed, but until achieving a state-of-the-art, the process may suffer from high operation costs due to shut downs for catalysts regeneration or replacement.

The present invention explained below after the discussion of the prior art is a combination of a low cost and abundant metal with a promoter aiming to improve the carbon resistance and stability of the final material, operating in reaction conditions suitable for CO-methanation, water gas shift, hydrogenation and hydrogenolysis of hydrocarbons and CO₂-methanation.

Despite the importance of carbon deposition and its effect on catalyst lifetime, only a few studies on carbon-resistant methanation catalysts have been published ¹⁻³. On the contrary, coke-resistant reforming catalysts have been widely studied ⁴⁻⁸. Different approaches have been investigated and proposed for suppressing carbon deposition on metal and particularly on Ni-based catalysts. A material to be used as support or potential additive for metal catalysts should fulfill the following requirements:
(a) improve the interaction of the metal phase with the support and the metal dispersion forming nano-sized metal particles,
(b) enhance the adsorption and activation of the reactants,
(c) provide active oxygen species for oxidation of the formed carbon, and
(d) block the carbon growth in the metal lattice, preventing carbon diffusion ⁴.

The role of metal-support interactions (MSI) on the catalytic performance and stability of Ni catalysts is crucial, as they stabilize the metallic nickel phase against sintering and may increase the electron density in the metal crystallites ⁴. In their study on Ni catalysts supported on MgO, TiO₂, SiO₂ and activated carbon, Bradford and Vannice ⁹ tried to shed light on the carbon deposition during dry CH₄ reforming. The increased coke resistance of the used Ni/TiO₂ catalyst was attributed to the low CO binding energy and the higher barrier for CO dissociation. For these reasons, the support's acidity and the weak MSI, SiO₂ is not considered a carbon-resistant material. Al₂O₃ is probably the most widely used support in heterogeneous catalysis. Conventional preparation methods for Ni/Al₂O₃ catalysts can yield Ni particles usually in the range of 10-20 nm (depending also on the Ni loading). Ni particles of this size have the tendency to form whisker type carbon. Catalyst treatment at high temperatures leads to the formation of nickel aluminate which is difficult to reduce, removes active Ni species and is inactive for hydrocarbons decomposition ^{10,11}. MgO has also been extensively used as both support and promoter of nickel catalysts for methanation and reforming reactions ¹². MgO is inexpensive and highly thermally stable. It is considered as a unique carrier for nickel catalysts, as Mg²⁺ and Ni²⁺ have the same ionic radii, while MgO and NiO have similar crystal structures. Due to that, Ni can diffuse into the MgO lattice, leading to the formation of NiO-MgO solid solution, with Strong Metal Support Interactions (SMSI) between the two phases. As a result, NiO is very well dispersed on MgO and partially reduced, forming very small Ni crystallites on the surface of the solid solution and thus avoiding sintering⁴. MgO is also a basic support with high affinity to adsorb and activate CO₂, which is present in reforming and methanation processes ¹³. The availability of surface oxygen or hydroxyl species is of importance for increased carbon formation resistance. In this direction, CeO₂ is a widely used as an oxygen supply material, due to its high oxygen storage/transport properties (OSC), i.e. its ability to release oxygen under oxygen-poor environment and store oxygen under oxygen-rich environments ⁶. Ceria can be reduced easily by H₂ and CO and chemisorbs high amounts of these gases, but its properties are highly sensitive to structural, textural and morphological modifications ¹⁴. In order to stabilize CeO₂, different additives have been proposed. The CeO₂-ZrO₂ binary system is one of the most often studied, as Zr⁴⁺ stabilizes ceria with the formation of solid solutions in all Ce/Zr ratios. Its enhanced oxygen storage/transport properties lead in many cases to increased coke resistant catalysts. Other additives (e.g. CaO) have also been used due to their basic character, their increased thermal stability and the ability to form carbonates from the reaction with CO (La₂O₃).

Recently, boron has been proposed to inhibit the growth of carbon whiskers ^{15,16} which are an important reason of catalyst deactivation and reactor blockage in reforming processes. Carbon whiskers or nano-fibers grow at the interface of the metal crystallites and the oxidic support after the carbon atoms have been diffusing from the catalyst surface to the interface. Boron has the ability to control the surface acidity and Ni dispersion. Its most important characteristic, according to a DFT calculations study, is that boron preferentially adsorb in octahedral sites of the first subsurface layer of Ni lattice and block C diffusion into the bulk and retain C atoms on the surface, where they can be gasified ^{15,17,18}. Still, the reports in the literature for reforming reactions (> 600°C) are contradictory with response to boron composition, pre-treatment conditions and synthesis method. Ni/Al₂O₃ catalysts modified with boron and other metal oxides have also been reported to increase the stability during methanation of hydrogen/CO mixtures and the resistance against sulfur poisoning ^{19,20}. Prerequisite were the simultaneous precipitation of all catalyst components and the pelletization of the catalyst for the application. The catalyst was tested under H₂/CO ratio equal to 3.1/1 in a fluidized-bed reactor. Such a pure, slightly overstoichiometric mixture of hydrogen and CO is the result of the state-of-the-art gas cleaning and gas conditioning in coal-to-SNG processes using a powerful scrubbing system such as Rectisol^{®} to remove all species besides CO and hydrogen.

In processes to produce renewable SNG starting from biomass gasification/pyrolysis or in Power-to-Gas processes using biogas from fermentation, such scrubbing systems at high pressures and very low temperatures (below 0°C) are not cost-efficient due to too high investment and operation costs. As a result, the feedgas to the methanation reactor, i.e. the gas leaving the gas cleaning section of the process, contain saturated hydrocarbons such as methane (3 - 12%, up to 60% in biogas) or ethane (up to 3%) etc. and/or unsaturated hydrocarbons such as olefins (up to 5%), aromatics and/or tars (several grams/Nm3). Both groups, but especially the unsaturated species may cause severe deactivation under fixed-bed conditions or in badly operated fluidized-bed or (simulated or real) moving bed reactors. As mentioned above, especially the hydrogen content, the temperature control and the addition of steam are important measures to decrease carbon deposition whereby especially the addition of steam (up to 40%) is costly and connected to undesirably high losses in energy and chemical/energetic efficiency.

It is therefore the objective of the present invention to provide a method for the production of SNG taking advantage from a catalyst which has a high selectivity for the catalytic reactions and achieves long lifetime of the catalyst due to minor clogging and strong carbon resistance to prevent its deactivation.

These objectives are achieved according to the present invention by a method to convert a CO and/or CO₂ comprising a gas mixture stemming from industrial processes, such as gasification of carbonaceous feedstocks (i.e. biomass), pyrolysis, ore conversion, combustion, calcination or fermentation, wherein the gas mixture further comprises saturated hydrocarbons in concentrations above 15% and/or unsaturated hydrocarbons, such as olefins, tars and/or aromatic compounds, into a methane rich gas by bringing the gas mixture into contact with a supported metal catalyst comprising:
a) as an active phase nickel and optionally cobalt, ruthenium, iridium, molybdenum, iron or any possible combination thereof,
b) as a promoter boron and optionally sodium, potassium, calcium, magnesium, boron, rubidium, barium, gallium, phosphorus or any possible combinations thereof, and
c) as a support alumina and optionally silica, titania, lanthana, zirconia, ceria, magnesia or any possible combination thereof.

The presented invention improves the carbon resistance of nickel catalysts for low temperature (250-400°C) applications such as the methanation. Carbon whisker formation may happen at lower temperatures in the presence of olefins when nickel catalyst is operated under fixed bed conditions²¹, however this process is very slow and does not lead to catalyst deactivation as the detached nickel was reported to still be active. Far more important is the formation of polymeric carbon depositions that may happen even if the catalyst is operated under fluidized bed conditions²². Polymeric carbon is formed by reaction of carbon atoms on the catalyst surface under locally hydrogen-deficient situations. These carbon atoms stem from dissociation of carbon oxides and hydrocarbons whereby unsaturated hydrocarbons (ethylene, acetylene) and CO lead to higher carbon deposition rates. Using presently the promoter boron in the nickel catalyst avoids the formation of intermediates for polymeric carbon. As a second benefit, the formation of nickel carbides and carbon whiskers is decreased.

To date there are no reports on boron-modified catalysts for CO-methanation operating in other than state-of-the art coal to SNG conditions, i.e., in the presence of hydrocarbons, olefins and/or aromatics or tars in the feed, which is typical for renewable processes starting from biomass. The presence of the hydrocarbons is critical for the stability of the catalytic material as they promote the deposition of carbon deposits, which cannot be easily removed in the methanation conditions. So, the provision of the efficient catalyst according to the present invention with both increased stability and carbon resistance for the low temperature CO-methanation in the presence of hydrocarbons in the feed yields the long-term lifetime of the catalyst.

Typically, the gas mixture comprises hydrogen and/or steam and the catalyst as mentioned above supports, besides the methanation reaction, also further reactions, such as water gas shift reaction, hydrogenation of unsaturated species, hydrogenolysis or steam reforming of hydrocarbons and carbon deposits.

The method according to any of the preceding claims, wherein the method is operated at temperatures between 200°C and 500°C in fixed bed, such as particles, packings, monoliths structures of or coated plate catalyst, fluidized bed, such as catalyst particles or powders suspended in up-flowing gas or liquid, or in moving bed operation. Usually, excellent results have been achieved in fluidized bed reactor where the particle size of the catalyst ranges from 100 µm to 5 mm.

A preferred composition of the catalyst can be achieved when the nickel content of the catalyst is between 5 and 60 weight-% and the promoter content between 0.1 to 30 wt% of promoter, preferably in the range from 0.1 to 15 wt%.

For the preparation of the catalyst, it has been shown that the long-term life time and the selectivity of the catalyst can be influenced advantageously when a precursor for the active phase and a precursor for the promoter are deposited together or separately on the support, preferably by wet impregnation of metal salts with the support and subsequent drying and calcination of the impregnated support. Preferably, the active phase precursor is nickel nitrate and the promoter precursor is H₃BO₃. Using this way of preparation, it has also been elucidated that the calcination can be carried out at a temperature in the range from 350 and 700 °C, preferably 400 to 600 °C. Alternatively, the calcination can be carried out at a temperature in the range from 350 and 500 °C, preferably 400 to 460 °C.

For the activation of the catalyst, it can be helpful when the catalyst is reduced prior to its contact with the gas mixture, said reduction is carried out at a temperature between 200 and 500 °C.

Preferred embodiments of the present invention are explained hereinafter with reference to the attached drawings which depict in:
- Figure 1: a chart on the activity tests on the CO methanation reaction;
- Figure 2: a chart on the stability test for CO-methanation in the presence of C₂H₄;
- Figure 3: a chart on the temperature programmed oxidation (TPO) on the spent catalysts;
- Figure 4: a chart on the stability test for NiB(coWI)-Al₂O₃ with 1 wt% boron content, at different temperatures, in the presence of C₂H₄; and
- Figure 5: a chart on the activity tests for Ni/Al₂O₃ catalysts calcined at different temperatures

According to the present invention, γ-Al₂O₃ is used as catalyst support. Nickel and boron are impregnated on the alumina, using Ni(NO₃)₂·6H₂O and H₃BO₃ precursors, respectively. Nickel nitrate and H₃BO₃ are dissolved in water (solvent) and then Al₂O₃ is being added. The pH of the suspension before impregnation is controlled to 3.5 - 4.5, with addition of HNO₃ if needed. After being left for stirring for 1.5 h, the solvent is evaporated. The resulted material is then dried for 12 h. After drying, the catalyst is calcined at 450°C or 550°C for 4h.

In a second synthesis procedure, γ-Al₂O₃ is also used as catalyst's support. Nickel is impregnated on the alumina, using Ni(NO₃)₂·6H₂O precursor. Nickel nitrate is dissolved in water (solvent) and then Al₂O₃ is being added. The pH of the suspension before impregnation is controlled to 3.5 - 4.5, with addition of HNO₃ if needed. After being left for stirring for 1.5 h, the solvent is evaporated. The resulted material is then dried for 12 h. After drying, the catalyst is calcined at 450°C or 550°C for 4h. The resulted material is then impregnated with H₃BO₃, using the same procedure described above. The same stirring, drying and calcination conditions are applied.

The catalysts were evaluated for CO-methanation reaction, in the presence of C₂H₄ in the feed. Ethylene is considered as a serious challenge for the process due to its high concentration in the gas feed coming from the gasification of wood. It is a serious challenge for nickel catalysts leading to deactivation by carbon deposition or coke formation ²¹.

### Example 1

Approximately 50 mg of a boron-modified Ni/Al₂O₃ catalyst (Ni loading 15 wt%, B loading 0.4 wt%) or Ni/Al₂O₃ catalyst is mixed with SiC and firmly fixed between two quartz wool plugs in a quartz tube plug flow reactor. The activity tests are conducted in the temperature range 493 - 773 K (220 - 500°C). The stability tests are conducted at 593 K (320°C). A thermocouple was inserted at the beginning of the catalyst bed. Prior to activity test the sample was reduced in 25 vol% H₂/N₂ at 773 K for 1 h. After cooling to 593 K, the reactants 25 vol% H₂ / 5 vol% CO / 2000 ppm C₂H₄ (bal. N₂) were introduced at 100 mL/min (GHSV = 118000 mLg⁻¹h⁻¹) and products were monitored using a Thermo Scientific Antaris IR spectrometer.

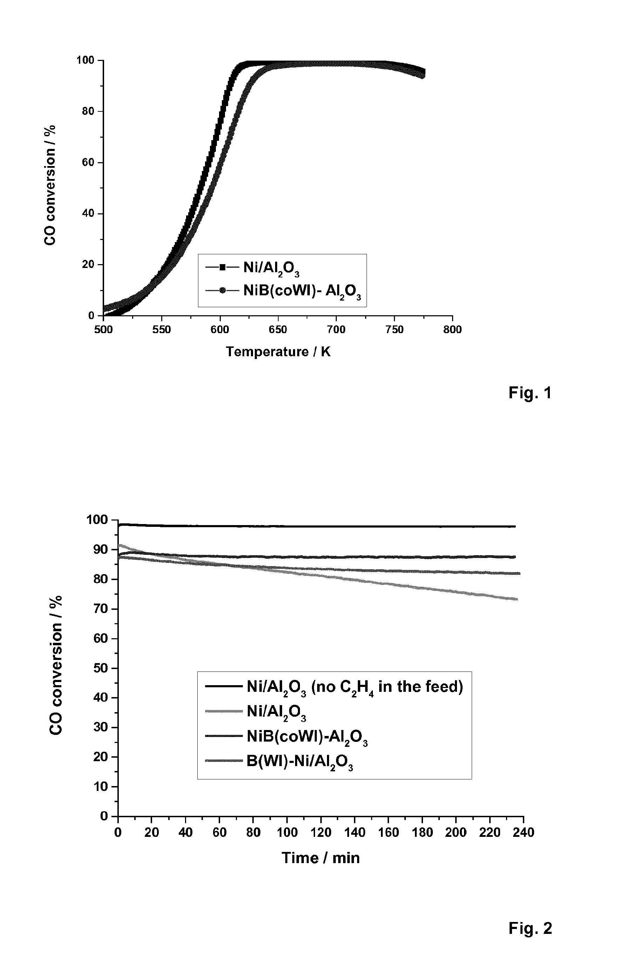

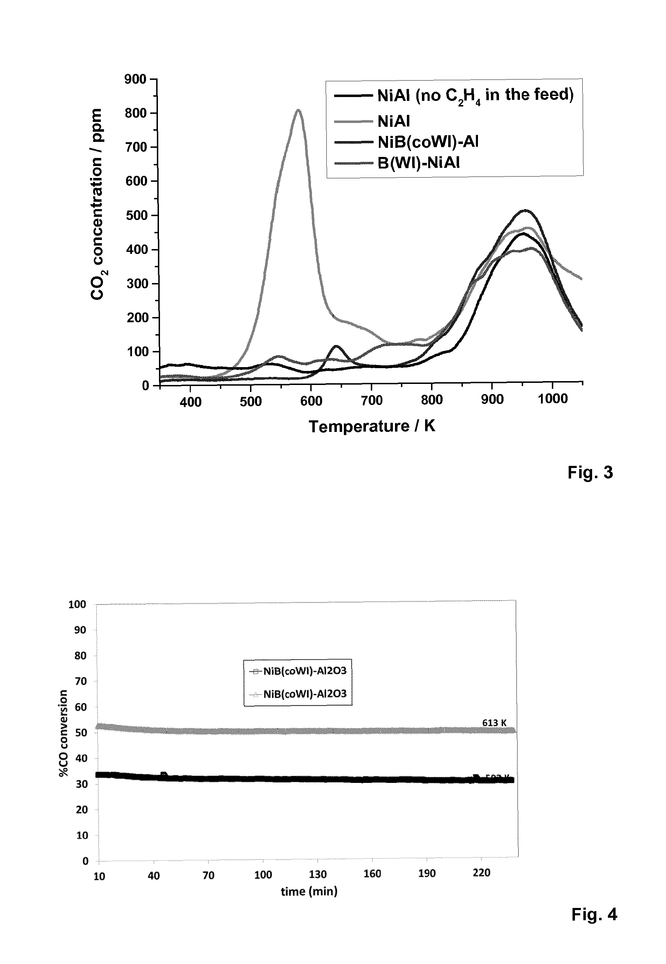

The result of the activity tests for the Ni/Al₂O₃ and the boron-modified Ni/Al₂O₃ catalysts are shown in Fig.1. The modification of the catalyst with 0.4 wt% of boron doesn't affect significantly the catalytic activity, which shifts to slightly higher temperatures over 560 K. The stability tests at 593 K are presented in Fig. 2. When C₂H₄ is not present in the feed, the Ni/Al₂O₃ catalyst retains its initial activity during the 4 hour catalytic test. A considerable decrease of CO conversion is observed when ethylene is present in the feed gas, as the Ni/Al₂O₃ catalyst loses approximately 20% of its initial activity within the 4 hour stability test. A remarkable improvement of the durability is observed in the presence of boron. When Ni/Al₂O₃ catalyst is impregnated with boron (sample B(WI)-Ni/Al₂O₃) there is only a 4% loss of the initial activity, while when Ni and B are co-impregnated on γ-Al₂O₃ (NiB(coWI)-Al₂O₃) no deactivation is observed. This may be attributed to the different types of carbonaceous deposits on the latter. Graphitic and/or filamentous carbon at T > 800 K and polymeric carbon at 630 - 700 K are detected in all catalysts after reaction, as seen in Fig. 3. But, in the case of NiB(coWI)Al the carbon peak at 560 K practically vanishes. This peak is due to the formation of polymeric carbon and/or nickel carbide (Ni₃C or NiC) which acts as intermediate for the formation of filamentous carbon. The latter results in the detachment of the nickel particle from the catalysts surface and subsequent deactivation of the catalyst.

### Example 2

Similar effect is observed for boron contents up to 10 wt%. The stabilizing effect of boron is evident and at different temperatures, but the activity is shifted to higher temperatures. It is though considerably active in the temperature range necessary for CO methanation.

The formation of Ni₃C and other intermediates is also limited in the latter example. It seems that boron content in this range is forming mixed phases which prevent carbon from diffusion. This carbon remains on the catalyst's surface and can be easily hydrogenated and removed as methane.

### Example 3

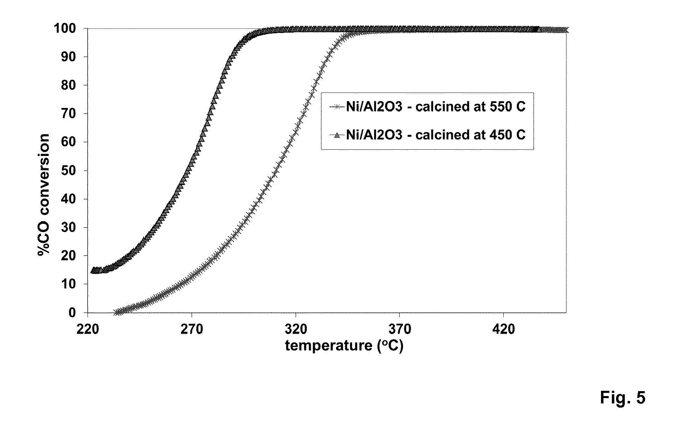

Calcination of both Ni/Al₂O₃ and NiB/Al₂O₃ at 450°C promotes the catalytic activity to lower temperature window, as seen in Fig. 5. This is attributed to the higher availability of nickel species on the catalyst's surface, which are participating in the reaction. The lower calcination temperature is preventing nickel from diffusion into the bulk and thus the formation of NiAl₂O₄ spinel phase which is considered inactive for methanation reaction. The addition of boron also improves the stability of the materials with time on stream, as no or limited deactivation is observed compared to the unmodified Ni/Al₂O₃ catalyst. This is due to the lower amount of carbonaceous deposits on the catalyst's surface, influenced by the presence of boron.

### References

(1) Gao, J.; Jia, C.; Li, J.; Gu, F.; Xu, G.; Zhong, Z.; Su, F. Nickel Catalysts Supported on Barium Hexaaluminate for Enhanced CO Methanation. Ind. Eng. Chem. Res. 2012, 51, 10345-10353.
(2) Zhao, A.; Ying, W.; Zhang, H.; Hongfang, M.; Fang, D. Ni/Al2O3 Catalysts for Syngas Methanation: Effect of Mn Promoter. J. Nat. Gas Chem. 2012, 21, 170-177.
(3) Gao, J.; Jia, C.; Zhang, M.; Gu, F.; Xu, G.; Su, F. Effect of Nickel Nanoparticle Size in Ni/α-Al2O3 on CO Methanation Reaction for the Production of Synthetic Natural Gas. Catal. Sci. Technol. 2013, 3, 2009.
(4) Catalysis for Alternative Energy Generation; Guczi, L.; Erdohelyi, A., Eds.; Springer: New York, 2012; p. 536.
(5) Panagiotopoulou, P.; Kondarides, D. I.; Verykios, X. E. Chemical Reaction Engineering and Catalysis Issues in Distributed Power Generation Systems. Ind. Eng. Chem. Res. 2011, 50, 523-530.
(6) Kambolis, a.; Matralis, H.; Trovarelli, a.; Papadopoulou, C. Ni/CeO2-ZrO2 Catalysts for the Dry Reforming of Methane. Appl. Catal. A Gen. 2010, 377, 16-26.
(7) Nandini, a.; Pant, K. K.; Dhingra, S. C. Kinetic Study of the Catalytic Carbon Dioxide Reforming of Methane to Synthesis Gas over Ni-K/CeO2-Al2O3 Catalyst. Appl. Catal. A Gen. 2006, 308, 119-127.
(8) Mu, J. F.; Cornaglia, L. M.; Cesar, D. V.; Schmal, M.; Lombardo, E. A. Kinetic Studies of the Dry Reforming of Methane over the Rh / La 2 O 3 -SiO 2 Catalyst. Ind. Eng. Chem. Res. 2007, 46, 7543-7549.
(9) Bradford, M. C. J.; Vannice, M. A. Catalytic Reforming of Methane with Carbon Dioxide over Nickel Catalysts I. Catalyst Characterization and Activity. Appl. Catal. A Gen. 1996, 142, 73-96.
(10) Cheng, D.; Zhu, X.; Ben, Y.; He, F.; Cui, L.; Liu, C. Carbon Dioxide Reforming of Methane over Ni/Al2O3 Treated with Glow Discharge Plasma. Catal. Today 2006, 115, 205-210.
(11) Zhu, X.; Huo, P.; Zhang, Y.; Cheng, D.; Liu, C. Structure and Reactivity of Plasma Treated Ni/Al2O3 Catalyst for CO2 Reforming of Methane. Appl. Catal. B Environ. 2008, 81, 132-140.
(12) Kambolis, A. Study of Catalytic Systems for the Exploitation of Carbon Dioxide to Produce Liquid Fuels, Patras, 2010, Vol. 4, p. 297.
(13) Tomishige, K.; Yamazaki, O.; Chen, Y.; Yokoyama, K.; Li, X.; Fujimoto, K. Development of Ultra-Stable Ni Catalysts for CO2 Reforming of Methane. Catal. Today 1998, 45, 35-39.
(14) Fierro, J. L. G.; Soria, J.; Sanz, J.; Rojo, J. M. Induced Changes in Ceria by Thermal under Vacuum or Hydrogen Treatments. J. Solid State Chem. 1987, 66, 154-162.
(15) Fouskas, a.; Kollia, M.; Kambolis, a.; Papadopoulou, C.; Matralis, H. Boron-Modified Ni/Al2O3 Catalysts for Reduced Carbon Deposition during Dry Reforming of Methane. Appl. Catal. A Gen. 2013**.**
(16) Xu, J.; Saeys, M. First Principles Study of the Coking Resistance and the Activity of a Boron Promoted Ni Catalyst. Chem. Eng. Sci. 2007, 62, 5039-5041.
(17) Xu, J.; Chen, L.; Fei, K.; Borgna, A.; Saeys, M. Effect of Boron on the Stability of Ni Catalysts during Steam Methane Reforming. J. Catal. 2009, 261, 158-165.
(18) Xu, J.; Saeys, M. Improving the Coking Resistance of Ni-Based Catalysts by Promotion with Subsurface Boron. J. Catal. 2006, 242, 217-226.
(19) Hammer, H.; Jacobi, H. Process for the Production of Boron-Containing Nickel-Aluminum Oxide Catalysts. US4354960, 1982.
(20) Hakim, I.; Hammer, H. Borhaltige Nickel-Katalysatoren Fur Die Methanisierung von Kohlenmonoxid. Chemie Ing. Tech. 1978, 50, 622-623.
(21) Czekaj, I.; Loviat, F.; Raimondi, F.; Biollaz, S.; Wokaun, A. Characterization of Surface Processes at the Ni-Based Catalyst during the Methanation of Biomass-Derived Synthesis Gas : X-Ray Photoelectron Spectroscopy ( XPS ). Appl. Catal. A Gen. 2007, 329, 68-78.
(22) Struis, R. P. W. J.; Bachelin, D.; Ludwig, C.; Wokaun, A. Studying the Formation of Ni 3 C from CO and Metallic Ni at T = 265 °C in Situ Using Ni KEdge X-Ray Absorption Spectroscopy. J. Phys. Chem. C 2009, 113, 2443-2451.

## Claims

1. A method to convert a CO and/or CO₂ comprising gas mixture stemming from an industrial processes, such as gasification of carbonaceous feedstocks, pyrolysis, ore conversion, combustion, calcination or fermentation, wherein the gas mixture further comprises saturated hydrocarbons in concentrations above 15% and/or unsaturated hydrocarbons, such as olefins, tars and/or aromatic compounds, into a methane rich gas by bringing the gas mixture into a contact with a supported metal catalyst comprising:
a) as an active phase nickel and optionally cobalt, ruthenium, iridium, molybdenum, iron or any possible combination thereof,
b) as a promoter boron and optionally sodium, potassium, calcium, magnesium, boron, rubidium, barium, gallium, phosphorus or any possible combinations thereof, and
c) as a support alumina and optionally silica, titania, lanthana, zirconia, ceria, magnesia or any possible combination thereof.

2. The method according to claim 1, wherein the gas mixture comprises hydrogen and/or steam and the catalyst supports, besides the methanation reaction, also further reactions, such as water gas shift reaction, hydrogenation of unsaturated species, hydrogenolysis or steam reforming of hydrocarbons and carbon deposits.

3. The method according to any of the preceding claims, wherein the method is operated at temperatures between 200°C and 500°C in fixed bed, such as particles, packings, monoliths structures of or coated plate catalyst, fluidized bed, such as catalyst particles or powders suspended in up-flowing gas or liquid, or in moving bed operation.

4. The method according to any of the preceding claims, wherein the nickel content of the catalyst is between 5 and 60 weight-% and the promoter content between 0.1 to 30 wt% of promoter, preferably in the range from 0.1 to 15 wt%.

5. The method according to any of the preceding claims, wherein an active phase precursor and a promoter precursor are deposited together or separately on the support, preferably by wet impregnation of metal salts with the support and subsequent drying and calcination of the impregnated support.

6. The method according to claim 5 wherein the active phase precursor is nickel nitrate and the promoter precursor is H₃BO₃.

7. The method according to claim 5 or 6, wherein the calcination is carried out at a temperature in the range from 350 and 700 °C, preferably 400 to 600 °C.

8. The method according to any of the preceding claims, wherein the catalyst is reduced prior to its contact with the gas mixture, said reduction is carried out at a temperature between 200 and 500 °C.

9. The method according to claim 5 or 6, wherein the calcination is carried out at a temperature in the range from 350 and 500 °C, preferably 400 to 460 °C.
